# EUROPÄISCHE PATENTSCHRIFT

(11) **EP 2 717 198 B1**
(45) Veröffentlichungstag und Bekanntmachung des Hinweises auf die Patenterteilung: **07.12.2016**
(21) Anmeldenummer: 13004361.5
(22) Anmeldetag: 05.09.2013
(51) Int. Cl.: G06K 19/077, H01R 24/52, H04N 7/10

(54) **Multimedia- oder Antennen-Dose**
Multimedia or antenna socket
Prise multimédia ou prise pour antenne

(30) Priorität: 04.10.2012 DE 102012019452
(43) Veröffentlichungstag der Anmeldung: 09.04.2014
(73) Patentinhaber: KATHREIN-Werke KG, 83022 Rosenheim (DE)
(72) Erfinder: Häntsch, Ralf, 83064 Raubling (DE)
(74) Vertreter: Flach, Dieter Rolf Paul

(56) Entgegenhaltungen:
- EP-A2- 2 469 666
- US-A1- 2008 100 467

## Beschreibung

Die vorliegende Erfindung betrifft eine Multimedia- und/oder Antennen-Dose nach dem Oberbegriff des Anspruches 1.

Sogenannte Antennendosen sind hinlänglich bekannt. In den meisten Fällen werden sie als Unterputzdosen eingesetzt. Sie weisen eine Einrichtung zum Anschluss eines Eingangskabels, in der Regel in Form eines Koaxialkabels auf. Sollen mehrere Multimedia- oder Antennendosen in Reihe hintereinander geschaltet werden, ist an der Dose auch eine Einrichtung zum Anschluss eines Ausgangskabels ausgebildet. Dann können die zugeführten Signale beispielsweise in Form von Fernseh- oder Radioprogrammen über das jeweilige Eingangskabel (Koaxialkabel) der Multimedia-Dose zugeführt und über das Ausgangskabel an eine jeweils nächste Multimedia-Dose weitergeleitet werden.

Über eine in der Multimedia-Dose vorgesehene Koppeleinrichtung können dann die betreffenden Signale ausgekoppelt werden, wenn an der betreffenden Multimedia-Dose ein oder mehrere Teilnehmerendgeräte beispielsweise zum Empfang von Fernsehprogrammen oder zum Empfang von Rundfunkprogrammen etc. angeschlossen werden sollen.

Bei den am meisten vorhandenen Antennensteckdosen stehen dazu zumindest zwei Schnittstellen zur Verfügung, in der Regel zwei koaxiale Schnittstellen, nämlich zum Anschluss eines Fernsehers sowie zum Anschluss eines Radios. Die koaxialen Schnittstellen in Form von koaxialen Kupplungen sind dabei in der Regel so ausgestattet, dass die eine Schnittstelle eine männliche Konfiguration und die andere Schnittstelle eine weibliche Konfiguration aufweist.

Derartige Antennendosen stellen letztlich Multimedia-Dosen dar. Multimedia-Dosen umfassen in der Regel weitere Schnittstellen und/oder anders geartete Schnittstellen, die nicht zwingend auf koaxiale Schnittstellen zum Anschluss von Koaxialkabeln beschränkt sein müssen. So können Buchsen beispielsweise zum Anschluss eines Telefons, Modems, Routers, Receivers bzw. auch Schnittstellen zum Anschluss von Lichtwellen-Leitern vorgesehen sein. Einschränkungen bestehen insoweit nicht. Beispielsweise kann eine Multimedia-Dose vier unterschiedlich geartete Schnittstellen aufweisen.

Bei aus dem Stand der Technik bekannten Antennendosen bzw. Multimedia-Dosen können diese beispielsweise mit einem Speicherbaustein ausgestattet sein, in dem Informationen wie beispielsweise die Seriennummer, Fertigungsdaten, Gerätestand oder Echtheitsmerkmale abgespeichert sein können. In Antennensignal-Hausverteilnetzen zum Übertragen von Fernseh- und/oder Rundfunkprogrammen werden üblicherweise mehrere Antennendosen bzw. Multimedia-Dosen in Reihe geschaltet. Zu diesem Zweck müssen die Antennensteckdosen in dem Antennensignal-Hausverteilnetz eindeutig adressierbar, lokalisierbar und identifizierbar sein.

Aus der US 2008/0100467 A1 ist ein Verbindungssystem mit einem Stecker und einer Buchse bekannt. Erst wenn der Stecker in der Buchse eingesteckt ist und ein elektrischer Kontakt besteht, kann ein RFID-Transponder ausgelesen werden. Dadurch wird signalisiert, dass ebenfalls eine Verbindung zwischen einer Glasfaser und der Buchse erfolgt ist, also der richtige Stecker mit der richtigen Buchse verbunden ist.

Die EP 2 469 666 A2 zeigt eine Multimedia-Dose, die eine Schalteinrichtung aufweist. Die Schalteinrichtung detektiert, ob ein Koaxialkabel angeschlossen ist oder nicht. Je nach Ergebnis kann die Schalteinrichtung die Multimedia-Dose von einer Enddose mit einem wirksamen Abschlusswiderstand zu einer Durchgangsdose umschalten.

Aus der EP 1 124 292 ist ein Antennensignal-Hausverteilnetz zum Übertragen von Fernseh- und/oder Rundfunkprogrammen bekannt. Das beschriebene Verteilnetz umfasst Anschlussdosen mit elektrischen und/oder mechanischen Adressbausteinen, so dass alle Anschlussdosen im Verteilnetz von einer Steuerungseinheit oder Zentrale aus eindeutig identifizierbar und einstellbar sind.

Obgleich dieses System eine hohe Flexibilität aufweist, ist es bei diesem System nicht möglich, die Adresse einer Dose zu überschreiben. Weiterhin kann das beschriebene Antennensignal-Hausverteilnetz lediglich über die Steuerungseinheit bzw. über die Zentrale einer Veränderung angepasst werden. Auch ein Freischalten von Antennendosen oder eine Vergabe von Berechtigungen für bestimmte Dienste oder Programmpakete ist lediglich über die Steuerungseinheit bzw. über die Zentrale möglich. Selbiges gilt für Konfigurationsdaten, so wie beispielsweise Frequenzbereiche oder Dämpfungen, die wiederum lediglich über die Steuerungseinheit oder über die Zentrale einstellbar sind.

Aufgabe der vorliegenden Erfindung ist insofern die Bereitstellung einer verbesserten Multimedia- und/oder Antennen-Dose.

Die Aufgabe wird erfindungsgemäß mit den im Anspruch 1 angegebenen Merkmalen gelöst. Vorteilhafte Ausgestaltungen der Erfindung sind in den Unteransprüchen angegeben.

Die erfindungsgemäße Multimedia- und/oder Antennen-Dose zeichnet sich dadurch aus, dass auf ihr unterschiedlichste Daten wie beispielsweise die Seriennummer, Fertigungsdaten, Gerätestand, Echtheitsmerkmale, der Umstand ob die Multimedia-Dose als Zwischendose oder als Enddose zu verwenden ist, Adressinformationen, Identifikationsinformationen, sowohl bei der Fertigung als auch bei der Installation der Multimedia-Dose abgespeichert werden können. Dazu umfasst die Multimedia-Dose einen mit ihr verbundenen RFID-Transponder. Weiterhin umfasst die Multimedia-Dose einen hochfrequenzdichten Schaltungsraum mit einer mit dem Gehäuse verbundenen Bodenplatte, die den Schaltungsraum begrenzt oder vom Schaltungsraum umfasst ist, wobei die Bodenplatte eine Öffnung aufweist. Eine Leiterplatine ist innerhalb des Schaltungsraumes angeordnet, wobei der RFID-Transponder mit seinem Mikrochip in dem Schaltungsraum angeordnet und durch die Öffnung der Bodenplatte zugänglich ist. Alternativ dazu ist in dem Gehäuse ein Kabelanschlussraum zum Aufnehmen des mindestens einen Anschlusskabels ausgebildet, wobei der Kabelanschlussraum durch eine Abschlussklappe hochfrequenzdicht verschließbar ist und wobei der RFID-Transponder auf einer Innenseite der Abschlussklappe aufgebracht und mit dieser verbunden ist.

Da der RFID-Transponder, der beispielsweise als ein RFID-Tag realisiert sein kann, sowohl eine Antenne als auch einen Mikrochip umfasst, können auf diesem beispielsweise die Seriennummer, Fertigungsdaten, Gerätestand, Echtheitsmerkmale, Fertigungsdaten, Positionsinformationen und Identifikationsinformationen der Multimedia-Dose abgespeichert werden. Diese Informationen können sowohl bei der Fertigung der Multimedia-Dose als auch erst bei der Installation dieser Multimedia-Dose auf dem Mikrochip aufgespeichert werden. Dabei hat ein Monteur im Rahmen der vorliegenden Erfindung zudem die Möglichkeit, jeder Multimedia-Dose einen Namen zuzuweisen, was ihm eine komfortable Inventarisierung aller Multimedia-Dosen in größeren Wohneinheiten erlaubt.

Weiterhin weist die Erfindung den Vorteil auf, dass die erfindungsgemäße Multimedia-Dose zum Schreiben bzw. zum Überschreiben der vorstehend erwähnten und in Rede stehenden Informationen nicht mit einer separaten Stromversorgung verbunden sein muss, da die zum Schreiben und Lesen der Informationen notwendige Energie von der dafür verwendeten Lese-/Schreibeinrichtung zur Verfügung gestellt wird. Das Schreiben bzw. das Lesen von Daten ist bei der erfindungsgemäßen Multimedia-Dose auch möglich, nachdem die Dose eingebaut ist und ohne dass die Abdeckplatte der Multimedia-Dose abgenommen werden muss. Daher bietet die erfindungsgemäße Multimedia-Dose eine enorm hohe Flexibilität und einen hohen Komfort, um Informationen der Multimedia-Dose zu lesen bzw. diese auf den Speicherchip zu schreiben und/oder die Konfiguration der Multimedia-Dose beispielsweise zu verändern.

Die Verwendung eines RFID-Transponders im Zusammenhang mit einer Verteilerdose ist grundsätzlich auch aus der DE 60 2006 000 391 T2 bekannt geworden. Allerdings dient hier die Verwendung eines derartigen RFID-Transponders einem völlig anderen Zweck. Gemäß dieser Vorveröffentlichung ist beispielsweise ein RFID-Transponder vorzugsweise mit dem Deckel einer Einbau- oder Unterputz-Verteilerdose aus Kunststoff verbunden. Ist eine derartige Einbaudose unter Putz verbaut, ist nämlich ihre Lage oder Position nicht ohne weiteres erkennbar. Ist der erwähnte RFID-Transponder im Bereich der Dose unter Putz verbaut, so bietet es die Möglichkeit, dass mittels einer Antenne ein elektromagnetisches Feld erzeugt werden kann, um dann beispielsweise durch Induktion, Resonanz etc. die entsprechende Unterputzdose zu orten und ausfindig zu machen.

Auch die DE 11 2009 001 973 T5 beschreibt lediglich eine Möglichkeit, eine zuvor hinter einem Baumaterial installierte elektrische Dose zu lokalisieren, also wieder aufzufinden, wozu die Dose mit einem RFID-Etikett versehen ist. Nach dem Auffinden der Dose hat der RFID-Transponder oder das RFID-Etikett keine Funktion mehr.

Schließlich beschreibt die DE 10 2005 040 984 A1 ebenfalls einen völlig anderen Gegenstand. Diese Vorveröffentlichung betrifft einen Netzwerkanschluss für Netzwerke zur Datenermittlung in einem zentral angeordneten Anschluss für aktive Geräte, insbesondere einem Switch-/Hub. Demgegenüber betreffen die in Rede stehenden Multimedia- oder Antennen-Dosen zum einen ein passives Verteilnetz. Zum anderen wird gemäß dieser Vorveröffentlichung nur die Verwendung eines sogenannten Authentifizierungsgerätes beschrieben, welches eine Eingabe umfassen soll, beispielsweise für Biometrie-Daten oder für PIN-Codes. Bei Übereinstimmung der Daten soll von einer Auswertelogik an einem Sender ein Signal abgegeben werden, worüber der Sender mit einem Empfänger der Anschlussdose kommuniziert und die Betätigung eines Sperrelements hierdurch erfolgt. Dadurch soll ein autorisierter Benutzer aktiviert werden. Auch diese Vorveröffentlichung betrifft also insoweit einen völlig anderen Gegenstand.

Der im Rahmen der vorliegenden Erfindung eingesetzte RFID-Transponder ist vorzugsweise an dem Gehäuse der Multimedia-Dose befestigt. Vorzugsweise umfasst dabei die Multimedia-Dose ferner eine ein dielektrisches Material umfassende Trägerplatte, die zwischen dem Gehäuse und dem RFID-Transponder angeordnet ist. Durch die zwischen dem Gehäuse und dem RFID-Transponder angeordnete Trägerplatte liegt der RFID-Transponder nicht unmittelbar auf dem Gehäuse auf, das beispielsweise aus einem Metall bestehen kann, so dass die Sende- und/oder Empfangseigenschaften des RFID-Transponders verbessert sind.

Der Kabelanschlussraum ist durch eine Abschlussklappe der Multimedia-Dose abschließbar, wobei die Abschlussklappe mittels eines Klapparms an dem Gehäuse klappbar befestigt ist. Der RFID-Transponder ist vorzugsweise an dem Klapparm, der beispielsweise als Kunststoffbügel ausgebildet ist, befestigt. Dadurch ist der RFID-Transponder nicht direkt auf dem Gehäuse der Multimedia-Dose angeordnet, so dass unterhalb des RFID-Transponders kein Metall angeordnet ist, so dass die Sende-/Empfangseigenschaften des RFID-Transponders verbessert sind. Darüber hinaus lässt sich so eine Lese-/Schreibeinrichtung einfach in die Nähe der Multimedia-Dose positionieren, so dass Informationen einfach auf dem Mikrochip des RFID-Transponders geschrieben und einfach von diesem ausgelesen werden können.

Vorzugsweise ist der RFID-Transponder an einer Innenseite der Abschlussklappe befestigt oder in der Abschlussklappe integriert. Wenn der RFID-Transponder auf der Innenseite der Abschlussklappe angeordnet ist, dann können von dem Mikrochip des RFID-Transponders lediglich Daten ausgelesen und auf diesem aufgeschrieben werden, wenn sich die Abschlussklappe in einem geöffneten Zustand befindet. Wenn der RFID-Transponder in der Abschlussklappe integriert ist, dann können die Daten sowohl bei geöffneter als auch bei geschlossener Abschlussklappe gelesen und geschrieben werden. Ein weiterer Vorteil ist, dass der RFID-Transponder vor äußeren Einflüssen geschützt ist und daher auch nicht manipulierbar ist.

Das Gehäuse umfasst vorzugsweise einen mit diesem verbundenen Tragring zum Befestigen der Multimedia-Dose an einem Untergrund, wobei der RFID-Transponder an dem Tragring zumindest mittelbar befestigt ist. Eine entsprechend ausgebildete Multimedia-Dose ist besonders einfach aufgebaut, da der RFID-Transponder einfach an dem Tragring befestigt wird. Vorzugsweise ist dabei zwischen dem Tragring und dem RFID-Transponder eine ein dielektrisches Material umfassende Trägerplatte angeordnet, so dass der RFID-Transponder nicht auf dem Tragring direkt aufliegt. Bei entsprechend ausgebildeten Multimedia-Dosen, bei denen der RFID-Transponder an dem Tragring des Gehäuses befestigt ist, lassen sich Daten von dem Mikrochip des RFID-Transponders besonders einfach lesen und besonders einfach auf diesen schreiben, da der RFID-Transponder besonders einfach zugänglich ist.

In einer weiteren bevorzugten Ausführungsform ist die Leiterplatine unterhalb der Bodenplatte angeordnet.

In einer weiteren bevorzugten Ausführungsform umfasst der RFID-Transponder eine an der Bodenplatte befestigte Antenne und einen auf der Leiterplatine befestigten Mikrochip, wobei der Mikrochip über zwei elektrische Leitungen mit der Antenne verbunden ist, und wobei der Mikrochip mit der Leiterplatine über zumindest eine Datenleitung zum Austausch von Daten zwischen dem Mikrochip und der Leiterplatine gekoppelt ist.

Entweder ist die Rückseite der Leiterplatine metallisiert oder die Leiterplatine ist zwischen der Bodenplatte und einem metallischen oder metallisierten Deckel angeordnet, so dass in jedem Fall ein Hochfrequenz-Schaltungsraum gebildet ist, in dem die Leiterplatine und der Mikrochip des RFID-Transponders angeordnet sind. Weiterhin ist die Leiterplatine vorzugsweise von der Bodenplatte galvanisch getrennt.

Bei einer entsprechend ausgebildeten Multimedia-Dose kann die Konfiguration dieser einfach mittels einer Lese-/Schreibeinrichtung, die Daten mit dem RFID-Transponder austauscht, eingestellt werden. So lässt sich beispielsweise die Konfiguration der Multimedia-Dose dahingehend ändern, dass die Multimedia-Dose entweder als Zwischendose oder als Enddose verwendet wird. Weiterhin können bei einer entsprechend ausgebildeten Multimedia-Dose bestimmte Berechtigungen für bestimmte Dienste oder Programmpakete vergeben werden. Prinzipiell ist jede Veränderung der Konfiguration der Multimedia-Dose möglich, die üblicherweise mittels einer Steuerungseinrichtung vollzogen wird.

Vorzugsweise ist der RFID-Transponder senkrecht zu der Bodenplattenebene orientiert und durch die Öffnung der Bodenplatte zugänglich. Bei einer entsprechend ausgebildeten Multimedia-Dose befindet sich die Antenne des RFID-Transponders in dem Hochfrequenz-Schaltungsraum der Multimedia-Dose und ist daher vor Fremdstrahlung bzw. Streustrahlung geschützt. Eine Lese-/Schreibeinrichtung lässt sich einfach in die Öffnung der Bodenplatte einführen, so dass ein zuverlässiger Datenaustausch zwischen der Lese-/Schreibeinrichtung und RFID-Transponder gewährleistet ist.

Vorzugsweise weist die Bodenplatte einen Trichter auf, der um die Öffnung der Bodenplatte herum angeordnet ist. Bei einer entsprechend ausgebildeten Multimedia-Dose ist die Antenne des RFID-Transponders besonders zuverlässig vor Streustrahlung geschützt.

Vorzugsweise ist der RFID-Transponder in der Bodenplatte integriert. Dadurch ist gewährleistet, dass dieser vor Umwelteinflüssen zuverlässig geschützt ist. Darüber hinaus kann gewährleistet werden, dass der RFID-Transponder vor Manipulationen gesichert ist.

In einer weiteren bevorzugten Ausführungsform umfasst die Multimedia-Dose ferner eine RFID-Lese-/Schreibeinrichtung zum Austausch von Daten mit dem RFID-Transponder, wobei die RFID-Lese-/Schreibeinrichtung auf der Leiterplatine befestigt ist und dazu ausgebildet ist, Daten über die Leiterplatine auszutauschen. Bei einer entsprechend ausgebildeten Multimedia-Dose ist eine drahtgebundene Verbindung zwischen dem RFID-Transponder und der RFID-Lese-/ Schreibeinrichtung nicht notwendig, so dass der Aufbau einer entsprechend aufgebauten Multimedia-Dose besonders einfach ist.

Die Erfindung wird nachfolgend anhand von Zeichnungen näher erläutert. Dabei zeigen im Einzelnen:
- Figur 1:: eine räumliche Darstellung einer aus dem Stand der Technik bekannten Multimedia-Dose mit einer geöffneten Abschlussklappe;
- Figur 2:: eine räumliche Darstellung einer erfindungsgemäßen Multimedia-Dose gemäß einer ersten Ausführungsform der vorliegenden Erfindung mit geschlossener Abschlussklappe;
- Figur 3:: eine Draufsicht auf eine erfindungsgemäße Multimedia-Dose gemäß einer zweiten Ausführungsform der vorliegenden Erfindung;
- Figur 4:: eine räumliche Darstellung einer erfindungsgemäßen Multimedia-Dose gemäß einer dritten Ausführungsform der vorliegenden Erfindung;
- Figur 5:: eine räumliche Darstellung einer erfindungsgemäßen Multimedia-Dose gemäß einer vierten Ausführungsform der vorliegenden Erfindung mit einer geöffneten Abschlussklappe;
- Figur 6:: eine Draufsicht auf eine erfindungsgemäße Multimedia-Dose gemäß einer fünften Ausführungsform der vorliegenden Erfindung mit einer geschlossenen Abschlussklappe;
- Figur 7a:: eine Draufsicht auf eine erfindungsgemäße Multimedia-Dose gemäß einer sechsten Ausführungsform der vorliegenden Erfindung;
- Figur 7b:: eine vergrößerte Querschnittsdarstellung der in Figur 7a dargestellten MultimediaDose mit einem Schnitt entlang der Ebene E-E aus Figur 7a;
- Figur 8a:: eine Draufsicht auf eine erfindungsgemäße Multimedia-Dose gemäß einer siebten Ausführungsform der vorliegenden Erfindung mit geschlossener Abschlussklappe;
- Figur 8b:: eine vergrößerte Querschnittsdarstellung der in Figur 8a dargestellten MultimediaDose mit einem Schnitt entlang der Ebene E-E aus Figur 8a;
- Figur 9a:: eine Draufsicht auf eine erfindungsgemäße Multimedia-Dose gemäß einer achten Ausführungsform der vorliegenden Erfindung mit geschlossener Abschlussklappe;
- Figur 9b:: eine vergrößerte Querschnittsdarstellung der in Figur 9a dargestellten Multimedia-Dose mit einem Schnitt entlang der Ebene E-E aus Figur 9a;
- Figur 10a:: eine Draufsicht auf eine erfindungsgemäße Multimedia-Dose gemäß einer neunten Ausführungsform der vorliegenden Erfindung mit geschlossener Abschlussklappe;
- Figur 10b:: eine vergrößerte Querschnittsdarstellung der in Figur 10a dargestellten Multimedia-Dose mit einem Schnitt entlang der Ebene E-E aus Figur 10a;
- Figur 11a:: eine Draufsicht auf eine erfindungsgemäße Multimedia-Dose gemäß einer zehnten Ausführungsform der vorliegenden Erfindung mit geschlossener Abschlussklappe;
- Figur 11b:: eine vergrößerte Querschnittsdarstellung der in Figur 11a dargestellten Multimedia-Dose mit einem Schnitt entlang der Ebene E-E aus Figur 11a; und
- Figur 12:: eine Draufsicht auf einen RFID-Transponder.

In der nun folgenden Beschreibung bezeichnen gleiche Bezugszeichen gleiche Bauteile bzw. gleiche Merkmale, so dass eine einmal in Bezug auf eine Zeichnung durchgeführte Beschreibung bezüglich eines Bauteils auch für die übrigen Zeichnungen bzw. Figuren gilt, so dass eine wiederholende Beschreibung vermieden wird.

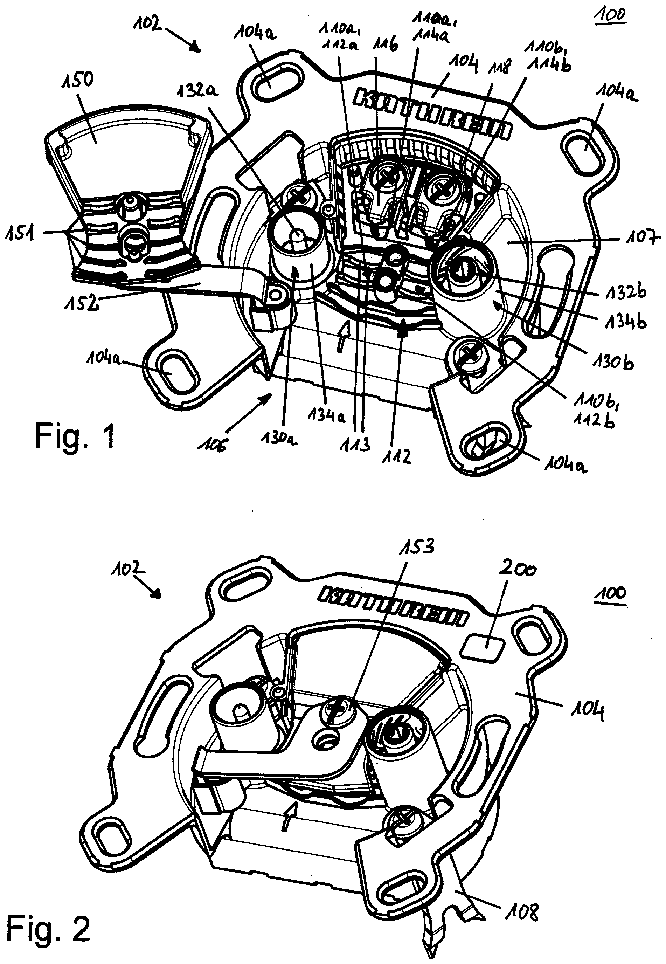

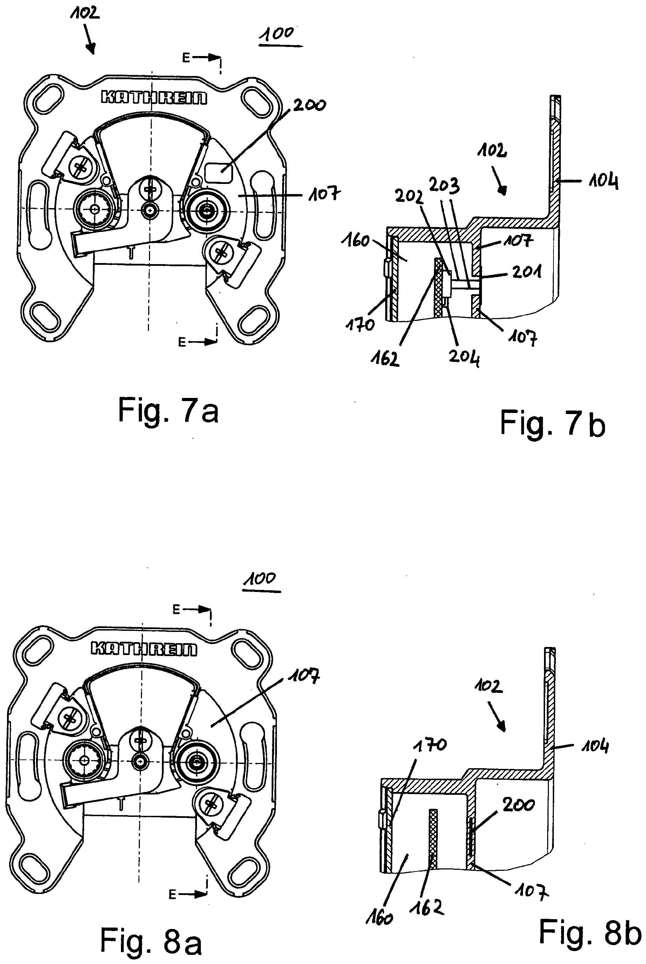

Figur 1 zeigt eine räumliche Darstellung einer Multimedia-Dose 100, die aus dem Stand der Technik bekannt ist. Jedoch gelten alle in Bezug auf Figur 1 gemachten Erläuterungen auch für die weiteren Figuren 2 bis 11b. Die Multimedia-Dose 100 umfasst ein in der Regel näherungsweise zylinderförmiges Gehäuse 102, welches an seiner Unterseite mit einem Gehäusedeckel 170 (Figuren 7b bis 11b) abschließbar ist. An der gegenüberliegenden Anschluss- oder Oberseite sind zwei koaxiale Schnittstelleneinrichtungen bzw. Schnittstellenkörper 130a, 130b ausgebildet, die stirnseitig aus der Multimedia-Dose 100 herausragen. Ferner umfasst die Multimedia-Dose 100 einen Montageflansch 104 bzw. einen Tragring 104, der mit Montageöffnungen 104a versehen ist. Der Montageflansch 104 ist fast um das gesamte Gehäuse 102 umlaufend, wobei der Montageflansch 104 in dem in Figur 1 unten dargestellten Bereich der Anschlusskabel-Eingangsseite 106 eine Ausnehmung aufweist.

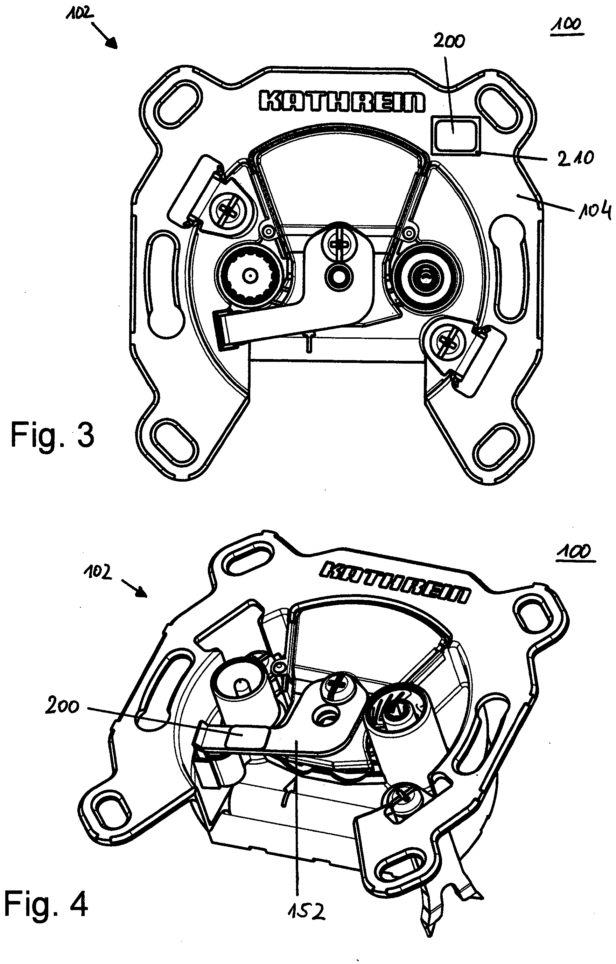

An der Außenseite des Gehäuses 102 sind zwei Spreizbügel 108 (s. Figuren 2 und 4) befestigt, mittels denen die Multimedia-Dose 100 in für diese vorgesehene Bauräume, so wie beispielsweise Wandlöcher oder Unterputz-Gerätedosen, verspreizt werden kann.

Aus Figur 1 ist ersichtlich, dass die Multimedia-Dose 100 eine Eingangs-Anschlusseinrichtung 110a und eine Ausgangs-Anschlusseinrichtung 110b umfasst. Die Eingangs- und die Ausgangs-Anschlusseinrichtungen 110a, 110b sind so ausgestaltet, dass an diesen Anschlusskabel angeschlossen werden können, die in den Figuren nicht dargestellt sind.

Die in den Figuren nicht dargestellten Anschlusskabel sind üblicherweise als Koaxialkabel mit Innenleiter und Außenleiter ausgebildet. Dabei sind die Anschlusskabel von einer Außenisolierung umschlossen, die von dem Außenleiter abgetrennt werden kann, so dass die jeweiligen Außenleiter freigelegt werden können. Auch die jeweiligen Innenleiter können von einer entsprechenden Isolierungsschicht freigelegt werden, so dass diese stirnseitig aus den jeweiligen Anschlusskabeln herausragen.

Die Eingangs-Anschlusseinrichtung 110a und die Ausgangs-Anschlusseinrichtung 110b sind durch eine Außenleiter-Kontakteinrichtung bzw. durch ein Kabelbett 112a, 112b und durch Innenleiter-Kontakteinrichtungen bzw. Innenleiter-Anschlüsse 114a, 114b gebildet. Dabei umfasst die Multimedia-Dose 100 einen Kabelanschlussraum 112, in dem die Außenleiter-Kontakteinrichtungen 112a, 112b gebildet sind. Die Außenleiter-Kontakteinrichtungen 112a, 112b sind mit Querrippen 113 versehen, wobei im Bereich der Querrippen 113 die entsprechend abgesetzten und freigelegten Endbereiche der Außenleiter der Koaxialkabel aufliegen können und dadurch mit dem elektrisch leitfähigen Gehäuse 102 kontaktierbar sind.

Die stirnseitig überstehenden Innenleiter können in die entsprechenden Innenleiter-Kontakteinrichtungen 114a, 114b vorstehen und können dort mit mittels Schrauben 118 betätigten Klemmzungen 116 mechanisch festgeklemmt und elektrisch kontaktiert werden. Der Aufbau für beide Anschlusskabel ist entsprechend identisch aufgebaut.

Die in Figur 1 links liegend angeordnete Innenleiter-Kontakteinrichtung 114a bildet mit der davor befindlichen Außenleiter-Kontakteinrichtung 112a die Eingangs-Anschlusseinrichtung 110a, wohingegen die in Figur 1 rechts dargestellte Innenleiter-Kontakteinrichtung 114b mit der davor befindlichen Außenleiter-Kontakteinrichtung 112b die Ausgangs-Anschlusseinrichtung 110b bildet.

Der so gebildete Kabelanschlussraum 112 kann durch Umlegen einer in Figur 1 geöffnet dargestellten Abschlussklappe 150 hochfrequenzdicht verschlossen werden, wobei die Abschlussklappe 150 üblicherweise über einen als Kunststoffbügel ausgebildeten Klapparm 152 schwenkbar am Gehäuse 102 der Multimedia-Dose 100 gehalten ist. Dabei umfasst die Abschlussklappe 150 auch Querrippen 151, die bei umgeklappter bzw. geschlossener Abschlussklappe 150 mit den entsprechenden Außenleitern und mit den Anschlusskabeln in Kontakt bringbar sind. Die Abschlussklappe 150 kann mittels einer Schraube 153 (s. Figur 2) mit dem Gehäuse 102 verbunden werden, wobei dann die Anschlusskabel in dem Kabelanschlussraum 112 festklemmbar sind. Die unteren Querrippen vom Gehäuse 102 und Abschlussklappe 150 sind dabei so ausgebildet, dass sie sich teilweise in die jeweiligen Außenmäntel der Anschlusskabel einkerben, wodurch eine Zugentlastung der Anschlusskabel gewährleistet wird.

In sämtlichen gezeigten Ausführungsbeispielen sind zwei koaxiale Schnittstellenkörper 130a, 130b für die Multimedia-Dose 100 vorgesehen. Jedoch ist die vorliegende Erfindung nicht darauf beschränkt, dass die Multimedia-Dose lediglich zwei Schnittstellenkörper umfasst. Die erfindungsgemäße Multimedia-Dose 100 kann selbstverständlich auch lediglich einen Schnittstellenkörper oder auch drei, vier oder mehr Schnittstellenkörper aufweisen. Die in den Figuren dargestellten Schnittstellenkörper 130a, 130b ragen stirnseitig aus der Multimedia-Dose 100 bzw. aus der durch den Montageflansch 104 definierten Montagefläche heraus. Die Schnittstellenkörper 130a, 130b umfassen jeweils zylinderförmige Schnittstellenkörper-Außenleiter 134a, 134b und konzentrisch dazu angeordnete Schnittstellenkörper-Innenleiter 132a, 132b. Dabei weist der in den Figuren links dargestellte Schnittstellenkörper 130a eine sogenannte männliche Konfiguration auf, bei der der Schnittstellenkörper-Innenleiter 132a steckerförmig ausgebildet ist. Der in den Figuren rechts dargestellte Schnittstellenkörper 130b weist eine sogenannte weibliche Konfiguration auf, bei der der Schnittstellenkörper-Innenleiter 132b buchsenförmig ausgebildet ist.

Die erfindungsgemäße Multimedia-Dose 100 weist eine Anschlusskabel-Eingangsseite 106 auf, die in den Figuren 1 bis 11 im unteren Bereich der Multimedia-Dose ausgebildet ist. Die Anschlusskabel können der Eingangs-Anschlusseinrichtung 110a; 112a, 114a und/oder der Ausgangs-Anschlusseinrichtung 110b; 112b, 114b durch die Anschlusskabel-Eingangsseite 106 zugeführt werden. Dabei sind die zwei Schnittstellenkörper 130a, 130b angrenzend oder im Bereich der Anschlusskabel-Eingangsseite 106 angeordnet.

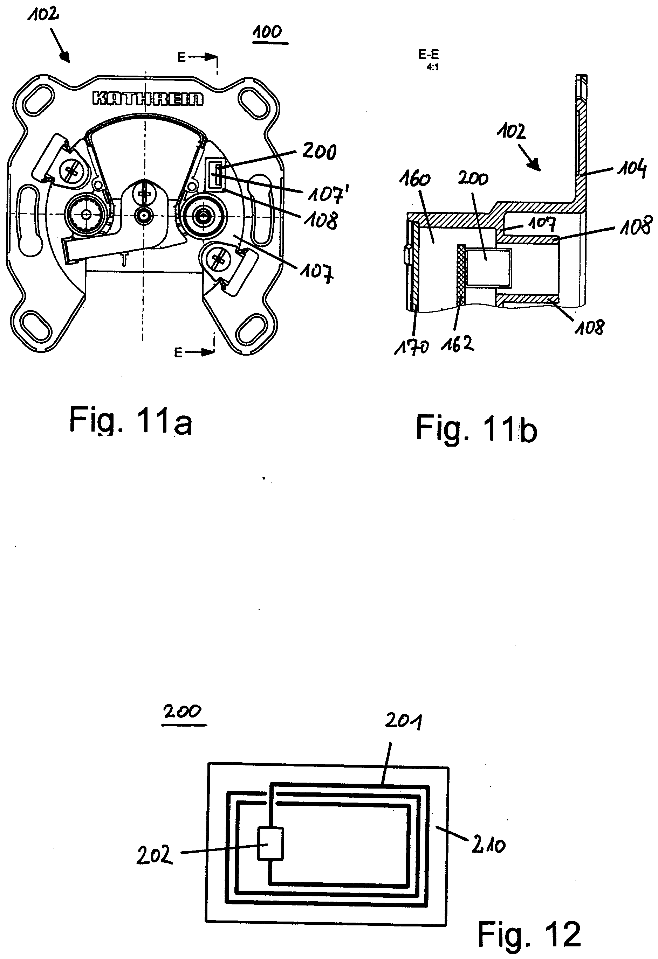

Figur 2 zeigt eine erste Ausführungsform der erfindungsgemäßen Multimedia-Dose 100. Bei der in Figur 2 dargestellten Multimedia-Dose 100 ist auf dem Tragring 104 ein RFID-Transponder 200 angeordnet und am Tragring 104 befestigt. Auf dem RFID-Transponder 200, der schematisch auch in Figur 12 dargestellt ist, können Daten auf einen Mikrochip 202 des RFID-Transponders 200 aufgeschrieben und von diesem ausgelesen werden. Für dieses Schreiben bzw. Lesen von Daten ist eine RFID-Lese-/Schreibeinrichtung notwendig, die hinlänglich aus dem Stand der Technik bekannt ist. Bei der in Figur 2 dargestellten Multimedia-Dose können in dem Mikrochip 202 beispielsweise die Seriennummer, die Fertigungsdaten, der Gerätestand, Echtheitsmerkmale, die Adresse der Multimedia-Dose 100 und weitere Informationen gespeichert sein bzw. auf diesem aufgebracht werden. Der übrige Aufbau der in Figur 2 dargestellten Multimedia-Dose 100 ist identisch mit dem Aufbau der in Figur 1 dargestellten Multimedia-Dose 100.

Figur 3 zeigt eine zweite Ausführungsform der erfindungsgemäßen Multimedia-Dose 100. Die zweite Ausführungsform der Multimedia-Dose 100 unterscheidet sich von der ersten Ausführungsform der Multimedia-Dose 100 dadurch, dass der RFID-Transponder 200 auf einer ein dielektrisches Material umfassenden Trägerplatte 210 angeordnet ist, die in einer entsprechenden Ausnehmung des Tragrings befestigt ist. Diese Trägerplatte 210 ist mit dem Tragring 104 und mit dem RFID-Transponder 200 verbunden. Vorteil einer entsprechenden Ausführung ist, dass sich hinter dem RFID-Transponder 200 nicht direkt metallisches Material befindet, so dass die Sende- und Empfangseigenschaften des RFID-Transponders 200 verbessert sind.

Figur 4 zeigte eine dritte Ausführungsform der erfindungsgemäßen Multimedia-Dose 100. Bei der in Figur 4 dargestellten Multimedia-Dose 100 ist der RFID-Transponder 200 auf dem Klapparm 152, der als Kunststoffbügel 152 ausgebildet ist, aufgebracht und an diesem befestigt. Die übrige Funktionalität der in Figur 4 dargestellten Multimedia-Dose ist identisch mit der Funktionalität der in den Figuren 2 und 3 dargestellten Multimedia-Dosen 100.

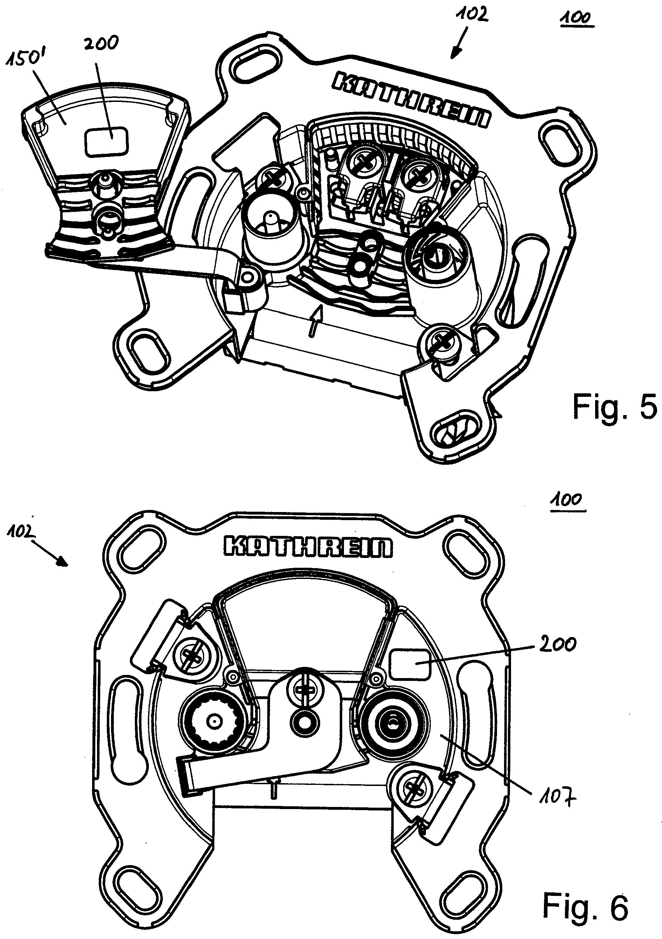

In Figur 5 ist eine vierte Ausführungsform der erfindungsgemäßen Multimedia-Dose 100 dargestellt. Bei der in Figur 5 dargestellten Multimedia-Dose 100 ist der RFID-Transponder 200 auf einer Innenseite 150' der Abschlussklappe 150 aufgebracht und mit dieser verbunden. Bei der Multimedia-Dose 100 gemäß der vierten Ausführungsform können Daten über den RFID-Transponder 200 lediglich ausgetauscht werden, wenn sich die Abschlussklappe 150 in einem wie in Figur 5 dargestellten geöffneten Zustand befindet.

Figur 6 zeigt eine erfindungsgemäße Multimedia-Dose 100 gemäß einer fünften Ausführungsform der vorliegenden Erfindung. Bei der in Figur 6 dargestellten Multimedia-Dose 100 ist der RFID-Transponder 200 auf der Bodenplatte 107 des Gehäuses 102 angeordnet und an dieser befestigt. Folglich befindet sich der RFID-Transponder 200 nicht in der Montageebene, die durch den Tragring 104 definiert ist, so dass der RFID-Transponder 200 eine geschütztere weil zurückversetzte Position als die RFID-Transponder 200 in den Figuren 2, 3 und 4 aufweist.

In den Figuren 7a und 7b ist eine Multimedia-Dose 100 gemäß einer sechsten Ausführungsform der vorliegenden Erfindung dargestellt. Figur 7a zeigt eine Draufsicht auf die Multimedia-Dose 100, wohingegen Figur 7b eine Querschnittsdarstellung der in Figur 7a dargestellten Multimedia-Dose 100 mit einem Schnitt entlang der Ebene E-E darstellt. Der RFID-Transponder 200 umfasst eine Antenne 201 und einen Mikrochip 202. Die Antenne 201 ist an der Bodenplatte 107 des Gehäuses 102 befestigt, wohingegen der Mikrochip 202 auf einer Leiterplatine 162 befestigt ist. Die Antenne 201 ist mit dem Mikrochip 202 über zwei elektrische Leitungen 203 verbunden. Über die elektrischen Leitungen 203 kann sowohl Energie dem Mikrochip 202 zugeführt werden, und darüber hinaus können über die elektrischen Leitungen 203 Informationen von der Antenne 201 zu dem Mikrochip 202 und von dem Mikrochip 202 zu der Antenne 201 übertragen werden. Der Mikrochip 202 ist wiederum über zwei Datenleitungen 204 mit der Leiterplatine 162 verbunden, so dass über die zwei Datenleitungen 204 Daten zwischen der Leiterplatine 162 und dem Mikrochip 202 ausgetauscht werden können.

Aus Figur 7b ist ersichtlich, dass die Rückseite der Multimedia-Dose 100 mittels eines Deckels 170 verschlossen ist. Dieser Deckel 170 besteht entweder aus Metall oder ist metallisiert, so dass zwischen dem Deckel 170 und der Bodenplatte 107 ein Hochfrequenz-Schaltungsraum gebildet ist, in dem die Platine 162 angeordnet ist. Dieser Hochfrequenz-Schaltungsraum ist folglich vor äußerer Strahlung geschützt.

Bei einer entsprechend ausgebildeten Multimedia-Dose 100 kann die Konfiguration dieser Multimedia-Dose 100 mittels des RFID-Transponders verändert werden, da der Mikrochip 202 des RFID-Transponders 200 mit der Leiterplatine 162 der Multimedia-Dose 100 verbunden ist und somit Informationen auf die Steuerungseinrichtung der Multimedia-Dose Einfluss nehmen kann. Beispielsweise kann so die Adresse der Dose in einem Hausverteilnetz verändert werden. Weiterhin können beispielsweise Berechtigungen für bestimmte Dienste oder Programmpakete über den RFID-Transponder freigeschaltet oder gesperrt werden. Darüber hinaus ist es möglich, eine entsprechend aufgebaute Multimedia-Dose zwischen zwei Zuständen zu ändern, nämlich zwischen einem Zustand, in dem die Multimedia-Dose 100 als Zwischendose fungiert, und einem anderen Zustand, in dem die Multimedia-Dose 100 als eine Enddose fungiert. Dafür muss ein entsprechender Widerstand zwischen der Eingangs-Anschlusseinrichtung 110a und der Ausgangs-Anschlusseinrichtung 110b geändert werden. Dies ist über den RFID-Transponder 200 möglich.

In den Figuren 8a und 8b ist eine Multimedia-Dose 100 gemäß einer siebten Ausführungsform der vorliegenden Erfindung dargestellt. Figur 8a zeigt eine Draufsicht auf die entsprechende Multimedia-Dose 100, wohingegen Figur 8b eine Querschnittsdarstellung der in Figur 8a dargestellten Multimedia-Dose 100 mit einem Schnitt entlang der Ebene E-E darstellt. Aus Figur 8b ist ersichtlich, dass der RFID-Transponder 200 in der Bodenplatte 107 des Gehäuses 102 integriert ist. Die übrige Funktionalität der in den Figuren 8a und 8b dargestellten Multimedia-Dose 100 ist ansonsten identisch mit der Funktionalität der in den Figuren 2 bis 6 dargestellten Multimedia-Dosen 100.

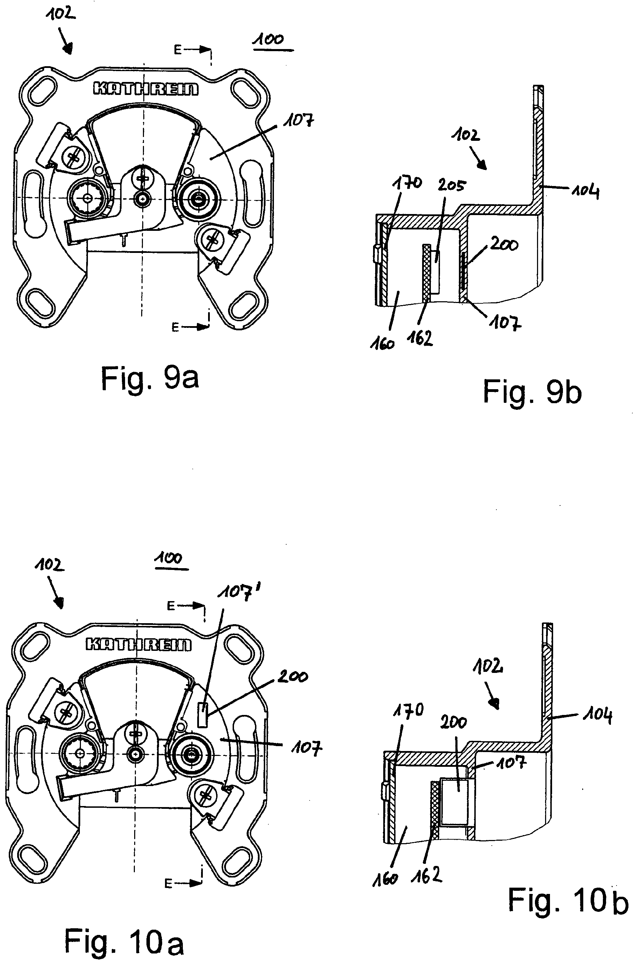

In den Figuren 9a und 9b ist eine Multimedia-Dose 100 gemäß einer achten Ausführungsform der vorliegenden Erfindung dargestellt, wobei Figur 9a eine Draufsicht auf die Multimedia-Dose 100 und Figur 9b eine Querschnittsdarstellung der in Figur 9a dargestellten Multimedia-Dose 100 mit einem Schnitt entlang der Schnittebene E-E darstellt. Aus Figur 9b ist ersichtlich, dass der RFID-Transponder 200 wie bei der Multimedia-Dose 100 gemäß der siebten Ausführungsform in der Bodenplatte 107 integriert ist. Bei der in den Figuren 9a und 9b dargestellten Multimedia-Dose 100 ist jedoch ferner eine RFID-Lese-/Schreibeinrichtung 205 vorgesehen, die auf der Leiterplatine 162 befestigt ist. Die RFID-Lese-/Schreibeinrichtung 205 ist dazu ausgebildet, Daten über die Leiterplatine 162 auszutauschen. Ferner können über die RFID-Lese-/Schreibeinrichtung 205 Daten mit dem RFID-Transponder 200 ausgetauscht werden. Folglich ist es bei der Multimedia-Dose 100 gemäß der achten Ausführungsform der vorliegenden Erfindung nicht notwendig, dass die Leiterplatine 162 über elektrische Leitungen mit dem RFID-Transponder 200 verbunden ist. Die übrige Funktionalität der in den Figuren 9a und 9b dargestellten Multimedia-Dose 100 ist identisch mit der Multimedia-Dose 100 gemäß der sechsten Ausführungsform der vorliegenden Erfindung.

In den Figuren 10a und 10b ist eine Multimedia-Dose 100 gemäß einer neunten Ausführungsform dargestellt, wobei Figur 10a eine Draufsicht auf die entsprechende Multimedia-Dose 100 darstellt, wohingegen in Figur 10b eine Querschnittsdarstellung der in Figur 10a dargestellten Dose mit einem Schnitt entlang der Schnittebene E-E dargestellt ist. Aus den Figuren 10a und 10b ist ersichtlich, dass in der Bodenplatte 107 eine Öffnung 107' vorgesehen ist. Der RFID-Transponder 200 ist senkrecht zu der Bodenplattenebene der Bodenplatte 107 orientiert und durch die Öffnung 107 zugänglich. Somit befindet sich der RFID-Transponder in dem HF-Schaltungsraum zwischen dem Deckel 170 und der Bodenplatte 107, so dass der RFID-Transponder vor Fremdstrahlung geschützt ist. Eine RFID-Lese-/Schreibeinrichtung kann durch die Öffnung 107' in den HF-Schaltungsraum geschoben werden, so dass Daten mit dem RFID-Transponder 200 ausgetauscht werden können. Dabei ist die Öffnung 107' so dimensioniert, dass die elektromagnetische Abschirmung der Dose nicht beeinträchtigt wird. Die übrige Funktionalität der Multimedia-Dose 100 gemäß der neunten Ausführungsform ist identisch mit der Funktionalität der Multimedia-Dosen 100, die in den Figuren 2 bis 6 und 8a, 8b dargestellt sind.

Die Öffnungen 107' der in den Figuren 10a bis 11b dargestellten Multimedia-Dosen 100 können verschließbar ausgestaltet sein.

In den Figuren 11a und 11b ist eine Multimedia-Dose 100 gemäß der zehnten Ausführungsform der vorliegenden Erfindung dargestellt, wobei Figur 11a eine Draufsicht auf die entsprechende Multimedia-Dose 100 und Figur 11b eine Querschnittsdarstellung der in Figur 11a dargestellten Multimedia-Dose 100 mit einem Schnitt entlang der Schnittebene E-E darstellt. Aus den Figuren 11a und 11b ist ersichtlich, dass die Bodenplatte 107 einen Trichter 108 aufweist, der um die Öffnung 107' der Bodenplatte 107 herum angeordnet ist. Der RFID-Transponder 200 ist senkrecht zu der Bodenplattenebene orientiert und durch die Öffnung 107' der Bodenplatte 107 zugänglich. Ferner ist der RFID-Transponder 200 mit der Leiterplatine 162 derart verbunden, dass Daten zwischen dem RFID-Transponder 200 und der Leiterplatine 162 bzw. auf der Leiterplatine 162 befindlichen elektronischen Bauteilen ausgetauscht werden können. Diese Verbindung kann vorzugsweise über elektrische Datenleitungen erfolgen. Durch Bereitstellen des Trichters 108, der um die Öffnung 107' der Bodenplatte 107 angeordnet ist, ist eine bessere Hohlleiterdämpfung gewährleistet, so dass der RFID-Transponder und die Leiterplatine 162 besser vor Fremdstrahlung geschützt sind und zugleich keine elektromagnetischen Wellen aus dem Schaltungsraum 160 austreten können.

In den Ausführungsbeispielen wurden Multimedia-Dosen 100 mit koaxialen Anschlusskabeln und koaxialen Schnittstellenkörpern 130a, 130b gezeigt. Eine erfindungsgemäße Multimedia-Dose 100 kann auch Schnittstellen für andere Arten von Anschlusskabeln, wie z.B. mehradrige Twisted-Pair-Kabel oder Lichtwellenleiter oder auch andersartige Schnittstellenkörper aufweisen.

Figur 12 zeigt einen möglichen RFID-Transponder, der eine Trägerplatte 210, eine Antenne 201 und einen Mikrochip 202 umfasst.

Bei der erwähnten Multimedia- und/oder Antennen-Dose handelt es sich bekanntermaßen um eine Dose für Antennensignal-Verteilnetze, also um eine Anschlussdose für Antennensignal-Verteilnetze. Bekanntermaßen dient dies insbesondere für ein passives Verteilnetz.

Der erwähnte RFID-Transponder 200 dient letztlich dazu, dass darauf Daten geschrieben und/oder vorhandene Daten überschrieben werden oder werden können. Dadurch ist es zum Beispiel im Rahmen der Erfindung auch möglich, in einem Hausverteilnetz eine Dose, also eine Multimedia- und/oder Antennen-Dose, einer eindeutigen Adresse zuzuweisen. Zudem ermöglicht dies die entsprechende Dose bei Bedarf zu konfigurieren.

## Patentansprüche

1. Multimedia- oder Antennen-Dose (100), mit folgenden Merkmalen:
- einem Gehäuse (102);
- mindestens einer im Gehäuse (102) angeordneten Anschlusseinrichtung (110a, 112a, 114a; 110b, 112b, 114b) zum Anschluss von mindestens einem Anschlusskabel;
- mindestens einer im Gehäuse (102) angeordneten Schnittstelleneinrichtung (130a, 130b);
- einem mit der Multimedia- oder Antennen-Dose (100) verbundenen RFID-Transponder (200);
- einem hochfrequenzdichten Schaltungsraum (160) mit einer mit dem Gehäuse (102) verbundenen Bodenplatte (107), die den Schaltungsraum (160) begrenzt oder vom Schaltungsraum (160) umfasst ist, wobei die Bodenplatte (107) eine Öffnung (107') aufweist mit einer Leiterplatine (162), die innerhalb des Schaltungsraumes (160) angeordnet ist, wobei der RFID-Transponder (200) mit seinem Mikrochip (202) in dem Schaltungsraum (160) angeordnet und durch die Öffnung (107') der Bodenplatte (107) zugänglich ist oder
in dem Gehäuse (102) ist ein Kabelanschlussraum (112) zum Aufnehmen des mindestens einen Anschlusskabels ausgebildet, wobei der Kabelanschlussraum (112) durch eine Abschlussklappe (150) hochfrequenzdicht verschließbar ist und der RFID-Transponder (200) ist auf einer Innenseite (150') der Abschlussklappe (150) aufgebracht und mit dieser verbunden.

2. Multimedia- oder Antennen-Dose (100) nach Anspruch 1, **dadurch gekennzeichnet, dass** der RFID-Transponder (200) an dem Gehäuse (102) befestigt ist.

3. Multimedia- oder Antennen-Dose (100) nach Anspruch 2, **dadurch gekennzeichnet, dass** die Multimedia- oder Antennen-Dose (100) ferner eine ein dielektrisches Material umfassende Trägerplatte (210) umfasst, die zwischen dem Gehäuse (102) und dem RFID-Transponder (200) angeordnet ist.

4. Multimedia- oder Antennen-Dose (100) nach Anspruch 1, **dadurch gekennzeichnet, dass** die Leiterplatine (162) unterhalb der Bodenplatte (107) angeordnet ist.

5. Multimedia- oder Antennen-Dose (100) nach einem der vorhergehenden Ansprüche, **gekennzeichnet durch** die folgenden weiteren Merkmale:-
- die Multimedia- oder Antennen-Dose (100) umfasst eine Abschlussklappe (150) zum Abschließen des Kabelanschlussraumes (112); und
- die Multimedia- oder Antennen-Dose (100) umfasst einen Klapparm (152), mittels dem die Abschlussklappe (150) an dem Gehäuse (102) befestigt ist.

6. Multimedia- oder Antennen-Dose (100) nach Anspruch 5, **dadurch gekennzeichnet, dass** der RFID-Transponder (200) an dem Klapparm (150) oder an einer Innenseite (150') der Abschlussklappe (150) befestigt ist oder in der Abschlussklappe (150) integriert ist.

7. Multimedia- oder Antennen-Dose (100) nach einem der Ansprüche 1 bis 5, **gekennzeichnet durch** die folgenden weiteren Merkmale:
- das Gehäuse (102) umfasst einen mit diesem verbundenen Tragring (104) zum Befestigen der Multimedia- oder Antennen-Dose (100) an einem Untergrund; und
- der RFID-Transponder (200) ist an dem Tragring (104) zumindest mittelbar befestigt.

8. Multimedia- oder Antennen-Dose (100) nach einem der Ansprüche 1 oder 5, **gekennzeichnet durch** die folgenden Merkmale:
- der RFID-Transponder (200) umfasst eine Antenne (201) und einen Mikrochip (202), die miteinander über zwei elektrische Leitungen (203) verbunden sind;
- die Antenne (201) ist an der Bodenplatte (107) befestigt; und
- der Mikrochip (202) ist auf der Leiterplatine (162) befestigt und mit dieser über zumindest eine Datenleitung (204) zum Austausch von Daten zwischen dem Mikrochip (202) und der Leiterplatine (162) gekoppelt.

9. Multimedia- oder Antennen-Dose (100) nach Anspruch 1 oder 4 oder 5, **dadurch gekennzeichnet, dass** der RFID-Transponder (200) an der Bodenplatte (107) befestigt ist.

10. Multimedia- oder Antennen-Dose (100) nach Anspruch 1 oder 4 oder 5, **dadurch gekennzeichnet, dass** der RFID-Transponder (200) senkrecht zu der Bodenplattenebene orientiert ist.

11. Multimedia- oder Antennen-Dose (100) nach Anspruch 10, **dadurch gekennzeichnet, dass** die Bodenplatte (107) einen Trichter (108) aufweist, der um die Öffnung (107') der Bodenplatte (107) herum angeordnet ist.

12. Multimedia- oder Antennen-Dose (100) nach Anspruch 11, **dadurch gekennzeichnet, dass** der RFID-Transponder (200) auf der Leiterplatine (162) befestigt und mit dieser über zumindest eine Datenleitung zum Austausch von Daten zwischen dem RFID-Transponder (200) und der Leiterplatine (162) gekoppelt ist.

13. Multimedia- oder Antennen-Dose (100) nach Anspruch 1 oder 4 oder 5, **dadurch gekennzeichnet, dass** der RFID-Transponder (200) in der Bodenplatte (107) integriert ist.

14. Multimedia- oder Antennen-Dose (100) nach Anspruch 13, **gekennzeichnet durch** die folgenden Merkmale:
- die Multimedia- oder Antennen-Dose (100) umfasst ferner eine RFID-Lese-/Schreibeinrichtung (205) zum Austausch von Daten mit dem RFID-Transponder (200);
- die RFID-Lese-/Schreibeinrichtung (205) ist auf der Leiterplatine (162) befestigt und dazu ausgebildet, Daten über die Leiterplatine (162) auszutauschen.

15. Multimedia- oder Antennen-Dose (100) nach einem der Ansprüche 1 bis 14, **dadurch gekennzeichnet, dass** der RFID-Transponder (200) mit Daten beschreibbar oder auf den RFID-Transponder (200) befindliche Daten überschreibbar sind.

16. Multimedia- oder Antennen-Dose (100) nach einem der vorhergehenden Ansprüche, **dadurch gekennzeichnet, dass** auf dem RFID-Transponder (200) eine Adresse abspeicherbar ist, worüber eine betreffende Multimedia- oder Antennen-Dose (100) in einem Hausverteilnetz eindeutig adressiert ist.

17. Multimedia- oder Antennen-Dose (100) nach einem der vorhergehenden Ansprüche, **dadurch gekennzeichnet, dass** die Multimedia- oder Antennen-Dose (100) in einem passiven Verteilnetz geschaltet ist.

## Claims

1. Multimedia or antenna socket (100), comprising the following features:
- a housing (102);
- at least one connection device (110a, 112a, 114a; 110b, 112b, 114b) arranged in the housing (102) for connecting at least one connection cable;
- at least one port device (130a, 130b) arranged in the housing (102);
- an RFID transponder (200) connected to the multimedia or antenna socket (100);
- a radio-frequency-proof circuit compartment (160) having a base plate (107) which is connected to the housing (102) and which defines the circuit compartment (160) or is included in the circuit compartment (160), wherein the base plate (107) comprises an opening (107') having a printed circuit board (162) arranged inside the circuit compartment (160), wherein the RFID transponder (200) is arranged along with its microchip (202) in the circuit compartment (160) and is accessible through the opening (107') in the base plate (107), or
a cable connection compartment (112) for receiving the at least one connection cable is formed in the housing (102), wherein the cable connection compartment (112) can be closed by means of a closure flap (150) so as to be radio-frequency-proof, and the RFID transponder (200) is placed onto and connected to an inner side (150') of the closure flap (150).

2. Multimedia or antenna socket (100) according to claim 1, **characterised in that** the RFID transponder (200) is attached to the housing (102).

3. Multimedia or antenna socket (100) according to claim 2, **characterised in that** the multimedia or antenna socket (100) further comprises a support plate (210) that comprises a dielectric material and is arranged between the housing (102) and the RFID transponder (200).

4. Multimedia or antenna socket (100) according to claim 1, **characterised in that** the printed circuit board (162) is arranged underneath the base plate (107).

5. Multimedia or antenna socket (100) according to any of the preceding claims, **characterised by** the following additional features:
- the multimedia or antenna socket (100) comprises a closure flap (150) for closing the cable connection compartment (112); and
- the multimedia or antenna socket (100) comprises a flap arm (152), by means of which the closure flap (150) is attached to the housing (102).

6. Multimedia or antenna socket (100) according to claim 5, **characterised in that** the RFID transponder (200) is attached to the flap arm (150) or to an inner side (150') of the closure flap (150) or is integrated in the closure flap (150).

7. Multimedia or antenna socket (100) according to any of claims 1 to 5, **characterised by** the following additional features:
- the housing (102) comprises a supporting ring (104) connected thereto for attaching the multimedia or antenna socket (100) to an underlying surface; and
- the RFID transponder (200) is at least indirectly attached to the supporting ring (104).

8. Multimedia or antenna socket (100) according to either claim 1 or claim 5, **characterised by** the following features:
- the RFID transponder (200) comprises an antenna (201) and a microchip (202) which are interconnected by means of two electrical lines (203);
- the antenna (201) is attached to the base plate (107); and
- the microchip (202) is attached to the printed circuit board (162) and coupled thereto by means of at least one data line (204) for exchanging data between the microchip (202) and the printed circuit board (162).

9. Multimedia or antenna socket (100) according to claim 1, 4 or 5, **characterised in that** the RFID transponder (200) is attached to the base plate (107).

10. Multimedia or antenna socket (100) according to claim 1, 4 or 5, **characterised in that** the RFID transponder (200) is oriented perpendicularly to the base plate plane.

11. Multimedia or antenna socket (100) according to claim 10, **characterised in that** the base plate (107) comprises a funnel (108) arranged around the opening (107') in the base plate (107).

12. Multimedia or antenna socket (100) according to claim 11, **characterised in that** the RFID transponder (200) is attached to the printed circuit board (162) and coupled thereto by means of at least one data line for exchanging data between the RFID transponder (200) and the printed circuit board (162).

13. Multimedia or antenna socket (100) according to claim 1, 4 or 5, **characterised in that** the RFID transponder (200) is integrated in the base plate (107).

14. Multimedia or antenna socket (100) according to claim 13, **characterised by** the following features:
- the multimedia or antenna socket (100) further comprises an RFID reading/writing device (205) for exchanging data with the RFID transponder (200);
- the RFID reading/writing device (205) is attached to the printed circuit board (162) and designed to exchange data via the printed circuit board (162).

15. Multimedia or antenna socket (100) according to any of claims 1 to 14, **characterised in that** data can be written onto the RFID transponder (200), or data on the RFID transponder (200) can be overwritten.

16. Multimedia or antenna socket (100) according to any of the preceding claims, **characterised in that** an address can be stored on the RFID transponder (200), as a result of which a particular multimedia or antenna socket (100) has a unique address in a home distribution network.

17. Multimedia or antenna socket (100) according to any of the preceding claims, **characterised in that** the multimedia or antenna socket (100) is connected in a passive distribution network.

## Revendications

1. Boîte multimédia ou boîte d'antenne (100), ayant les caractéristiques suivantes :
- un boîtier (102) ;
- au moins un dispositif de connexion (110a, 112a, 114a, 110b, 112b, 114b) placé dans le boîtier (102) pour connecter au moins un câble de raccordement ;
- au moins un dispositif d'interface (130a, 130b) placé dans le boîtier (102) ;
- un transpondeur RFID (200) relié à la boîte multimédia ou boîte d'antenne (100) ;
- un espace de circuit (160) étanche aux hautes fréquences avec une plaque de fond (107) reliée au boîtier (102) limitant l'espace de circuit (160) ou incluse dans l'espace de circuit (160), la plaque de fond (107) présentant une ouverture (107') avec une carte de circuit imprimé (162), qui est placée à l'intérieur de l'espace de circuit (160), le transpondeur RFID (200) étant placé avec sa micropuce (202) dans l'espace de circuit (160), et étant accessible par l'ouverture (107') de la plaque de fond (107) ou
un compartiment câbles (112) se trouvant dans le boîtier (102) et étant conçu pour recevoir au moins un câble de raccordement, le compartiment câbles (112) pouvant être fermé par un clapet de fermeture (150) étanche aux hautes fréquences et le transpondeur RFID (200) étant appliqué sur la face intérieure (150') du clapet de fermeture (150) et étant relié à ce dernier.

2. Boîte multimédia ou boîte d'antenne (100) selon la revendication 1, **caractérisée en ce que** le transpondeur RFID (200) est fixé au boîtier (102).

3. Boîte multimédia ou boîte d'antenne (100) selon la revendication 2, **caractérisée en ce que** la boîte multimédia ou boîte d'antenne (100) comprend en outre une plaque de support (210) comprenant un matériel diélectrique, qui est placée entre le boîtier (102) et le transpondeur RFID (200).

4. Boîte multimédia ou boîte d'antenne (100) selon la revendication 1, **caractérisée en ce que** la carte de circuit imprimé (162) est placée sous la plaque de fond (107).

5. Boîte multimédia ou boîte d'antenne (100) selon l'une quelconque des revendications précédentes, **caractérisée par** les caractéristiques suivantes :
- la boîte multimédia ou boîte d'antenne (100) comprend un clapet de fermeture (150) pour fermer le compartiment câbles (112) ; et
- la boîte multimédia ou boîte d'antenne (100) comprend un bras repliable (152) au moyen duquel le clapet de fermeture (150) est fixé au boîtier (102).

6. Boîte multimédia ou boîte d'antenne (100) selon la revendication 5, **caractérisée en ce que** le transpondeur RFID (200) est fixé au bras repliable (152) ou à une face interne (150') du clapet de fermeture (150) ou il est intégré au clapet de fermeture (150).

7. Boîte multimédia ou boîte d'antenne (100) selon l'une quelconque des revendications 1 à 5, **caractérisée par** les caractéristiques suivantes :
- le boîtier (102) comprend une bague de support (104) relié à celui-ci pour fixer la boîte multimédia ou boîte d'antenne (100) à un support ; et
- le transpondeur RFID (200) est fixé au moins indirectement à la bague de support (104).

8. Boîte multimédia ou boîte d'antenne (100) selon l'une quelconque des revendications 1 à 5, **caractérisée par** les caractéristiques suivantes :
- le transpondeur RFID (200) comprend une antenne (201) et une micropuce (202) qui sont reliées l'une à l'autre par deux lignes électriques (203)
- l'antenne (201) est fixée à la plaque de fond (107) ; et
- la micropuce (202) est fixée à la carte de circuit imprimé (162), et elle est couplée à celle-ci par au moins un câble de données (204) pour l'échange de données entre la micropuce (202) et la carte de circuit imprimé (162).

9. Boîte multimédia ou boîte d'antenne (100) selon les revendications 1, 4 ou 5, **caractérisée en ce que** le transpondeur RFID (200) est fixé à la plaque de fond (107).

10. Boîte multimédia ou boîte d'antenne (100) selon les revendications 1, 4 ou 5, **caractérisée en ce que** le transpondeur RFID (200) est perpendiculaire au niveau de la plaque de fond (107).

11. Boîte multimédia ou boîte d'antenne (100) selon la revendication 10, **caractérisée en ce que** la plaque de fond (107) présente un entonnoir (108) qui est disposé autour de l'ouverture (107') de la plaque de fond (107).

12. Boîte multimédia ou boîte d'antenne (100) selon la revendication 11, **caractérisée en ce que** le transpondeur RFID (200) est fixé à la carte de circuit imprimé (162), et il est couplé à celui-ci par au moins un câble de données (204) pour l'échange de données entre le transpondeur RFID (200) et la carte de circuit imprimé (162).

13. Boîte multimédia ou boîte d'antenne (100) selon les revendications 1, 4 ou 5, **caractérisée en ce que** le transpondeur RFID (200) est intégré dans la plaque de fond (107).

14. Boîte multimédia ou boîte d'antenne (100) selon la revendication 13, **caractérisée par** les caractéristiques suivantes :
- la boîte multimédia ou boîte d'antenne (100) comprend en outre une unité de lecture/écriture RFID (205) pour l'échange de données avec le transpondeur RFID (200) ;
- l'unité de lecture/écriture RFID (205) est fixée à la carte de circuit imprimé (162) et elle est conçue pour échanger des données via la carte de circuit imprimé (162).

15. Boîte multimédia ou boîte d'antenne (100) selon l'une quelconque des revendications 1 à 14, **caractérisée en ce que** des données peuvent être écrites sur le transpondeur RFID (200) ou des données se trouvant sur le transpondeur RFID (200) peuvent être écrasées.

16. Boîte multimédia ou boîte d'antenne (100) selon l'une quelconque des revendications précédentes, **caractérisée en ce qu'**une adresse peut être enregistrée sur le transpondeur RFID (200), avec lequel la boîte multimédia ou boîte d'antenne (100) en question est clairement adressée dans un réseau répartiteur.

17. Boîte multimédia ou boîte d'antenne (100) selon l'une quelconque des revendications précédentes, **caractérisée en ce que** la boîte multimédia ou boîte d'antenne (100) est commutée dans un réseau de distribution passif.
